# EUROPÄISCHE PATENTSCHRIFT

(11) **EP 3 109 643 B1**
(45) Veröffentlichungstag und Bekanntmachung des Hinweises auf die Patenterteilung: **08.08.2018**
(21) Anmeldenummer: 15173430.8
(22) Anmeldetag: 23.06.2015
(51) Int. Cl.: G01P 15/00, G01D 5/20

(54) **DREHWINKELMESSVORRICHTUNG ZUM ERFASSEN EINES DREHWINKELS**
TILT ANGLE MEASURING DEVICE FOR DETERMINING A TILT ANGLE
DISPOSITIF DE MESURE D'ANGLE DE ROTATION POUR DETECTER UN ANGLE DE ROTATION

(43) Veröffentlichungstag der Anmeldung: 28.12.2016
(73) Patentinhaber: SICK STEGMANN GmbH, 78166 Donaueschingen (DE)
(72) Erfinder: SELLMER, Dr. Christian, 78166 Donaueschingen (DE)
(74) Vertreter: Ludewigt, Christoph

(56) Entgegenhaltungen:
- EP-A1- 0 661 543
- EP-A1- 2 824 420
- WO-A1-2013/104455
- DE-A1- 10 123 188
- DE-A1- 10 224 134
- US-A1- 2014 150 553

## Beschreibung

Die Erfindung betrifft eine Drehwinkelmessvorrichtung zum Erfassen eines Drehwinkels zwischen zwei relativ zueinander drehenden Objekten gemäß Anspruch 1.

Zum Bestimmen eines Drehwinkels zwischen zwei relativ zueinander drehenden Objekten sind Drehwinkelmessvorrichtungen bekannt, die auf unterschiedliche physikalische Messprinzipien basieren. Die physikalischen Messprinzipien beruhen hierbei auf der Bestimmung von magnetischen, kapazitiven, induktiven oder optischen Größen. Entsprechend den verwendeten physikalischen Messprinzipien weisen diese Drehwinkelmessvorrichtungen unterschiedliche Vor- und Nachteile auf.

So erfordern die bekannten Drehwinkelmessvorrichtungen eine sehr präzise Fertigung, um genaue Messdaten liefern zu können. Dies führt dazu, dass die bekannten Drehwinkelmessvorrichtungen entsprechend teuer sind, je präziser sie messen können.

Ferner können sich die Messergebnisse der bekannten Drehwinkelmessvorrichtungen mit der Zeit verschlechtern. Dies tritt vor allem bei Drehwinkelmessvorrichtungen auf, die einen gewissen Achsversatz zwischen einer Hauptachse des zu vermessenden Objekts und der Anordnung der Drehwinkelmessvorrichtung aufweisen. Solch ein Aufbau wird auch als Off-Axis bezeichnet, wobei der Offset mit der Zeit zu einer größeren Abweichung zwischen dem zu messenden Drehwinkel und dem tatsächlich gemessenen Drehwinkel führt. Um diese Abweichung bzw. diesen mit der Zeit größer werdenden Messfehler auszugleichen, werden komplexe und auch teure Auswertungen benötigt, die zu einer Verteuerung der Drehwinkelmessvorrichtungen führen.

Aus DE 102 24 134 A1 ist ein Messgerät bekannt, das einen Positions-Sensor zum Erfassen der Position, Länge oder Winkellage von zwei linear oder rotatorisch relativ zueinander bewegten Bauteilen und einen nach dem Ferraris-Prinzip arbeitenden Beschleunigungs-Sensor umfasst. Eine Maßverkörperung des Positions-Sensors ist derart aufgebaut, dass sie gleichzeitig als Wirbelstromkörper für den BeschleunigungsSensor dienen kann. Hierdurch lassen sich der Positions-Sensor und der Beschleunigungs-Sensor kompakt und integral in einem Abtastkopf verbauen, ohne, dass ein signalstarkes Beschleunigungssignal ein Positionssignal negativ beeinflussen würde.

EP 2 824 420 A1 offenbart eine Drehwinkelmessvorrichtung, insbesondere eine Lagebestimmungseinrichtung, gemäß den Merkmalen des Oberbegriffs des Anspruchs 1.

Die US2014150553 offenbart inertiale Beschleunigungssensoren und Hall-Sensoren, die auf einem Sensor-Chip angebracht sind. Es ist daher eine Aufgabe der Erfindung, eine Drehwinkelmessvorrichtung zum Erfassen eines Drehwinkels zwischen zwei zueinander drehenden Objekten zur Verfügung zu stellen, die eine größere Messgenauigkeit bei moderaten Kosten und kompaktem Aufbau ermöglicht.

Die Aufgabe wird erfindungsgemäß gelöst durch eine Drehwinkelmessvorrichtung zum Erfassen eines Drehwinkels zwischen zwei relativ zueinander drehenden Objekten, umfassend eine magnetische oder induktive Maßverkörperung mit einem charakteristischen Magnetfeld, eine Magnetfeldmesseinheit zum Erfassen des charakteristischen Magnetfelds der magnetischen oder induktiven Maßverkörperung während deren Drehung, eine inertiale Messeinheit zum Erfassen einer linearen und/oder rotatorischen Beschleunigung um zumindest eine Achse der Drehwinkelmessvorrichtung, und eine Auswerteeinheit zum Ermitteln des Drehwinkels aus erfassten Daten, wobei die Auswerteeinheit die Daten der Magnetfeldmesseinheit und der inertialen Messeinheit kombiniert und den Drehwinkel aus der Kombination der Daten ermittelt, wobei die Magnetfeldmesseinheit aus zumindest zwei Magnetfeldsensoren besteht, die vorzugsweise in einem 90° Winkel zueinander und jeweils in einer Orientierung von 45° zur magnetischen Achse des charakteristischen Magnetfelds angeordnet sind, und die inertiale Messeinheit aus zumindest einem Drehratensensor oder aus zumindest zwei Beschleunigungssensoren oder aus zumindest einem Drehratensensor und zumindest zwei Beschleunigungssensoren besteht, und wobei die Magnetfeldmesseinheit, die inertiale Messeinheit und die Auswerteeinheit auf einem Sensorchip angeordnet sind.

Dies hat den Vorteil, dass die erfassten Daten auf unterschiedliche Messprinzipien basieren, wodurch eine Messungenauigkeit der jeweiligen Messprinzipien gegenseitig ausgeglichen werden können.

Gemäß einem weiteren bevorzugten Ausführungsbeispiel weist die Magnetfeldmesseinheit einen dritten Magnetfeldsensor auf, der senkrecht zu den zwei Magnetfeldsensoren angeordnet ist. Hierdurch können die erfassten Daten noch einfacher abgeglichen werden, wobei Störfelder detektiert und bei der Ermittlung des Drehwinkels mitberücksichtigt werden können.

Gemäß einem weiteren bevorzugten Ausführungsbeispiel besteht die magnetische Maßverkörperung aus einem Permanentmagnet, vorzugsweise einem Dipol- oder einem Multipolmagnet. Vorteilhafterweise besteht der Permanentmagnet aus einem Stabmagnet oder aus einem Kugelmagnet.

Gemäß einem weiteren bevorzugten Ausführungsbeispiel besteht die magnetische Maßverkörperung aus einem diametral magnetisierten oder axial magnetisierten Zylinder.

Gemäß einem weiteren bevorzugten Ausführungsbeispiel besteht die induktive Maßverkörperung aus einer Spule.

Gemäß einem weiteren bevorzugten Ausführungsbeispiel ist die Magnetfeldmesseinheit achsversetzt zu der magnetischen Achse des charakteristischen Magnetfelds der magnetischen oder induktiven Maßverkörperung angeordnet, so dass ein Off-Axis-Encoder gebildet ist.

Die erfindungsgemäße Drehwinkelmessvorrichtung kann auf ähnliche Weise durch weitere Merkmale ausgestaltet werden und zeigt dabei ähnliche Vorteile. Derartige weitere Merkmale sind beispielhaft, aber nicht abschließend in den sich an den unabhängigen Anspruch anschließenden Unteransprüchen beschrieben.

Die Erfindung wird nachstehend auch hinsichtlich weiterer Vorteile und Merkmale anhand von Ausführungsbeispielen erläutert.

Die erfindungsgemäße Drehwinkelmessvorrichtung dient zum Erfassen eines Drehwinkels, der sich zwischen zwei relativ zueinander drehenden Objekten einstellt. Hierbei können eine sich drehende Welle als das eine Objekt und ein Gehäuse, in dem die Welle gelagert ist, als das andere Objekt sein, so dass der Drehwinkel der Welle mittels der erfindungsgemäßen Drehwinkelmessvorrichtung ermittelt wird. Es können sich bei dem einem Objekt um eine Zugmaschine und bei dem anderen Objekt um einen Anhänger, der an die Zugmaschine angehängt ist, handeln, so dass die erfindungsgemäße Drehwinkelmessvorrichtung einen Drehwinkel zwischen der Zugmaschine und dem Anhänger ermitteln kann.

Bei dem Ausführungsbeispiel mit der sich drehenden Welle umfasst die erfindungsgemäße Drehwinkelmessvorrichtung eine magnetische Maßverkörperung, die vorzugsweise aus einem diametral magnetisierten oder axial magnetisierten Zylinder besteht, wobei der Zylinder die sich drehende Welle bildet.

Im Falle einer Erfassung des Drehwinkels einer Standardwelle besteht vorzugsweise die magnetische Maßverkörperung aus einem Permanentmagnet, vorzugsweise einem Dipol- oder einem Multipolmagnet, der an die Standardwelle angebracht ist und mit der Standardwelle schlupffrei mitdreht. Hierbei kann der Permanentmagnet aus einem Stabmagnet bestehen.

In alle Ausführungsform der magnetischen Maßverkörperung weist die magnetische Maßverkörperung ein charakteristisches Magnetfeld auf, das eine gerichtete magnetische Achse umfasst. Mit anderen Worten, das charakteristische Magnetfeld umfasst eine detektierbare Codierung.

An der magnetischen Maßverkörperung ist eine Magnetfeldmesseinheit angeordnet, die das charakteristische Magnetfeld der magnetischen Maßverkörperung während deren Drehung erfasst und erste Daten erzeugt. Die Magnetfeldmesseinheit besteht hierbei aus zumindest zwei Magnetfeldsensoren, die vorzugsweise in einem 90° Winkel zueinander und jeweils in einer Orientierung von 45° zu der gerichteten magnetischen Achse des charakteristischen Magnetfelds der magnetischen Maßverkörperung angeordnet sind. Vorzugsweise weist die Magnetfeldmesseinheit einen dritten Magnetfeldsensor auf, der senkrecht zu den beiden vorherigen Magnetfeldsensoren angeordnet ist.

Während die beiden, in einer Orientierung von 45° zu der gerichteten magnetischen Achse des charakteristischen Magnetfelds der magnetischen Maßverkörperung angeordneten Magnetfeldsensoren die Verdrehung der magnetischen Maßverkörperung erfassen, erfasst der dritte, senkrecht zu diesen beiden Magnetfeldsensoren angeordnete Magnetfeldsensor mögliche Störfelder, so dass dessen Daten mit den ersten Daten abgeglichen und bei der Ermittlung des Drehwinkels mitberücksichtigt werden können.

Weiterhin ist erfindungsgemäß eine inertiale Messeinheit an der Magnetfeldmesseinheit vorgesehen, wobei die inertiale Messeinheit eine lineare und/oder rotatorische Beschleunigung um zumindest eine Achse der erfindungsgemäßen Drehwinkelmessvorrichtung erfasst. Die erfasste lineare und/oder rotatorische Beschleunigung ergibt weitere Daten zur Ermittlung des Drehwinkels. Hierbei besteht die inertiale Messeinheit erfindungsgemäß aus zumindest einem Drehratensensor oder aus zumindest zwei Beschleunigungssensoren oder aus zumindest einem Drehratensensor und zumindest zwei Beschleunigungssensoren, so dass auch sehr kleine Drehwinkeländerungen durch die inertiale Messeinheit erfasst werden können.

Die von der inertialen Messeinheit und von der Magnetfeldmesseinheit erfassten Daten werden erfindungsgemäß durch eine Auswerteeinheit kombiniert bzw. verknüpft, so dass die Auswerteeinheit aus der Kombination der Daten den Drehwinkel ermittelt. D. h. die Magnetfeldmesseinheit ermöglicht stabile genaue Drehwinkelerfassung mit Erfassung der Absolutposition und die inertiale Messeinheit ermöglicht eine sehr feine und genaue Drehwinkelerfassung, so dass durch eine Kombination bzw. Verknüpfung der erfassten Daten beider Messeinheiten die jeweiligen Nachteile der Messeinheiten ausgeglichen bzw. verringert werden können.

Mit anderen Worten, auch sehr kleine Drehwinkeländerungen können durch die inertiale Messeinheit wesentlich genauer als die Magnetfeldmesseinheit erfasst werden, wobei durch die Erfassung der Absolutposition mittels der Magnetfeldmesseinheit gleichzeitig eine Drift der inertialen Messeinheit ausgeglichen werden kann, so dass die Auswerteeinheit erfindungsgemäß eine Drehwinkelangabe mit einem Drehwinkelfehler ermittelt, der kleiner als die Drehwinkelfehler der einzelnen Messeinheiten ist.

Zusätzlich sind die Magnetfeldmesseinheit, die inertiale Messeinheit und die Auswerteeinheit vorzugsweise auf einem Sensorchip angeordnet, so dass die gesamte erfindungsgemäße Drehwinkelmessvorrichtung sehr kompakt gestaltet werden kann. Hierbei sind die Magnetfeldmesseinheit, die inertiale Messeinheit und die Auswerteeinheit achsversetzt zu der magnetischen Achse des charakteristischen Magnetfelds der magnetischen Maßverkörperung angeordnet, so dass ein Off-Axis-Encoder gebildet ist.

Bei dem erwähnten Ausführungsbeispiel bzgl. der Zugmaschine und dem Anhänger besteht die magnetische Maßverkörperung aus einem Permanentmagnet, der wiederum als ein Kugelmagnet ausgebildet ist. Hierbei ist der Kugelmagnet an der Verbindungsstelle zwischen der Zugmaschine und dem Anhänger derart vorgesehen, dass der Kugelmagnet auf der Seite der Zugmaschine und die Magnetfeldmesseinheit und die inertiale Messeinheit auf der Seite des Anhängers angeordnet sind, bzw. auch umgekehrt. Hierdurch kann der kleinste Drehwinkel zwischen der Zugmaschine und dem Anhänger durch eine Verdrehung zwischen dem Kugelmagnet und den Messeinheiten abgebildet bzw. erfasst werden, wobei die Verknüpfung bzw. Kombination der Daten zu einem kleinstmöglichen Fehler bei der Ermittlung des Drehwinkels führt.

Nach einem weiteren Ausführungsbeispiel kann anstatt der magnetischen Maßverkörperung eine induktive Maßverkörperung bei der erfindungsgemäßen Drehwinkelmessvorrichtung verwendet werden. Hierbei besteht die induktive Maßverkörperung aus einer Spule, die ebenfalls ein charakteristisches Magnetfeld bereitstellt.

Die Magnetfeldmesseinheit und die inertiale Messeinheit sind wie bei den anderen Ausführungsbeispielen achsversetzt zu der induktiven Maßverkörperung, bzw. der Spule angeordnet. Die kleinste Verdrehung des charakteristischen Magnetfelds der Spule kann durch die Messeinheiten erfasst und mittels der Auswerteeinheit als Drehwinkel ausgegeben werden.

## Patentansprüche

1. Drehwinkelmessvorrichtung zum Erfassen eines Drehwinkels zwischen zwei relativ zueinander drehenden Objekten, umfassend
eine magnetische oder induktive Maßverkörperung mit einem charakteristischen Magnetfeld,
eine Magnetfeldmesseinheit zum Erfassen des charakteristischen Magnetfelds der magnetischen oder induktiven Maßverkörperung während deren Drehung,
eine inertiale Messeinheit zum Erfassen einer linearen und/oder rotatorischen Beschleunigung um zumindest eine Achse der Drehwinkelmessvorrichtung, und
eine Auswerteeinheit zum Ermitteln des Drehwinkels aus erfassten Daten, wobei die Auswerteeinheit die Daten der Magnetfeldmesseinheit und der inertialen Messeinheit kombiniert und den Drehwinkel aus der Kombination der Daten ermittelt, **dadurch gekennzeichnet, dass**
die Magnetfeldmesseinheit aus zumindest zwei Magnetfeldsensoren besteht, die vorzugsweise in einem 90° Winkel zueinander und jeweils in einer Orientierung von 45° zur magnetischen Achse des charakteristischen Magnetfelds angeordnet sind, und die inertiale Messeinheit aus zumindest einem Drehratensensor oder aus zumindest zwei Beschleunigungssensoren oder aus zumindest einem Drehratensensor und zumindest zwei Beschleunigungssensoren besteht, und
wobei die Magnetfeldmesseinheit, die inertiale Messeinheit und die Auswerteeinheit auf einem Sensorchip angeordnet sind.

2. Drehwinkelmessvorrichtung nach Anspruch 1, **dadurch gekennzeichnet, dass** die Magnetfeldmesseinheit einen dritten Magnetfeldsensor aufweist, der senkrecht zu den zwei Magnetfeldsensoren angeordnet ist.

3. Drehwinkelmessvorrichtung nach Anspruch 1 oder 2, **dadurch gekennzeichnet, dass** die magnetische Maßverkörperung aus einem Permanentmagnet, vorzugsweise einem Dipol- oder einem Multipolmagnet besteht.

4. Drehwinkelmessvorrichtung nach Anspruch 3, **dadurch gekennzeichnet, dass** der Permanentmagnet aus einem Stabmagnet oder aus einem Kugelmagnet besteht.

5. Drehwinkelmessvorrichtung nach Anspruch 1 oder 2, **dadurch gekennzeichnet, dass** die magnetische Maßverkörperung aus einem diametral magnetisierten oder axial magnetisierten Zylinder besteht.

6. Drehwinkelmessvorrichtung nach einem der vorhergehenden Ansprüche 1 oder 2, **dadurch gekennzeichnet, dass** die induktive Maßverkörperung aus einer Spule besteht.

7. Drehwinkelmessvorrichtung nach einem der vorhergehenden Ansprüche, **dadurch gekennzeichnet, dass** die Magnetfeldmesseinheit achsversetzt zu der magnetischen Achse des charakteristischen Magnetfelds der magnetischen oder induktiven Maßverkörperung angeordnet ist, so dass ein Off-Axis-Encoder gebildet ist.

## Claims

1. An angle of rotation measuring apparatus for detecting an angle of rotation between two objects rotating relative to one another comprising
a magnetic or inductive measurement scale having a characteristic magnetic field;
a magnetic field measuring unit for detecting the characteristic magnetic field of the magnetic or inductive measurement scale during its rotation;
an inertial measuring unit for detecting a linear and/or rotary acceleration about at least one axis of the angle of rotation measuring device; and
an evaluation unit for determining the angle of rotation from detected data, wherein the evaluation unit combines the data of the magnetic field measuring unit and of the inertial measuring unit and determines the angle of rotation from the combination of the data, **characterized in that** the magnetic field measuring unit comprises at least two magnetic field sensors that are preferably arranged at an angle of 90° with respect to one another and in each case at an orientation of 45° to the magnetic axis of the characteristic magnetic field and the inertial measuring unit comprises at least one angular rate sensor or at least two acceleration sensors or at least one angular rate sensor and at least two acceleration sensors; and wherein the magnetic field measuring unit, the inertial measuring unit, and the control unit are arranged on a sensor chip.

2. An angle of rotation measuring apparatus in accordance with claim 1, **characterized in that** the magnetic field measuring unit has a third magnetic field sensor that is arranged perpendicular to the two magnetic field sensors.

3. An angle of rotation measuring apparatus in accordance with claim 1 or claim 2, **characterized in that** the magnetic measurement scale comprises a permanent magnet, preferably a dipole magnet or a multipole magnet.

4. An angle of rotation measuring apparatus in accordance with claim 3, **characterized in that** the permanent magnet comprises a steel magnet or a ball magnet.

5. An angle of rotation measuring apparatus in accordance with claim 1 or claim 2, **characterized in that** the magnetic measurement scale comprises a diametrically magnetized or axially magnetized cylinder.

6. An angle of rotation measuring apparatus in accordance with claim 1 or claim 2, **characterized in that** the inductive measurement scale comprises a coil.

7. An angle of rotation measuring apparatus in accordance with any one of the preceding claims, **characterized in that** the magnetic field measuring unit is arranged axially offset from the magnetic axis of the characteristic magnetic field of the magnetic or inductive measurement scale so that an off-axis encoder is formed.

## Revendications

1. Dispositif de mesure d'angle de rotation pour détecter un angle de rotation entre deux objets tournant l'un par rapport à l'autre, comportant
un étalon de mesure magnétique ou inductif ayant un champ magnétique caractéristique,
une unité de mesure de champ magnétique pour détecter le champ magnétique caractéristique de l'étalon de mesure magnétique ou inductif pendant sa rotation,
une unité de mesure inertielle pour détecter une accélération linéaire et/ou rotatoire autour d'au moins un axe du dispositif de mesure d'angle de rotation, et
une unité d'évaluation pour déterminer l'angle de rotation à partir de données saisies, l'unité d'évaluation combinant les données de l'unité de mesure de champ magnétique et de l'unité de mesure inertielle et déterminant l'angle de rotation à partir de la combinaison des données,
**caractérisé en ce que**
l'unité de mesure de champ magnétique est constituée par au moins deux capteurs de champ magnétique qui sont agencés de préférence sous un angle de 90° l'un par rapport à l'autre et chacun dans une orientation de 45° par rapport à l'axe magnétique du champ magnétique caractéristique, et
l'unité de mesure inertielle est constituée par au moins un capteur de vitesse de rotation ou par au moins deux capteurs d'accélération ou par au moins un capteur de vitesse de rotation et par au moins deux capteurs d'accélération, et
l'unité de mesure de champ magnétique, l'unité de mesure inertielle et l'unité d'évaluation sont agencées sur une puce de capteur.

2. Dispositif de mesure d'angle de rotation selon la revendication 1,
**caractérisé en ce que** l'unité de mesure de champ magnétique comprend un troisième capteur de champ magnétique qui est agencé perpendiculairement auxdits deux capteurs de champ magnétique.

3. Dispositif de mesure d'angle de rotation selon la revendication 1 ou 2,
**caractérisé en ce que** l'étalon de mesure magnétique est constitué par un aimant permanent, de préférence par un aimant dipolaire ou multipolaire.

4. Dispositif de mesure d'angle de rotation selon la revendication 3,
**caractérisé en ce que** l'aimant permanent est constitué par un aimant en barre ou par un aimant en bille.

5. Dispositif de mesure d'angle de rotation selon la revendication 1 ou 2,
**caractérisé en ce que** l'étalon de mesure magnétique est constitué par un cylindre aimanté diamétralement ou aimanté axialement.

6. Dispositif de mesure d'angle de rotation selon l'une des revendications précédentes 1 ou 2,
**caractérisé en ce que** l'étalon de mesure inductif est constitué par une bobine.

7. Dispositif de mesure d'angle de rotation selon l'une des revendications précédentes,
**caractérisé en ce que** l'unité de mesure de champ magnétique est agencée de façon désaxée par rapport à l'axe magnétique du champ magnétique caractéristique de l'étalon de mesure magnétique ou inductif, de sorte qu'il en résulte un codeur rotatif hors axe.
